# EUROPEAN PATENT APPLICATION

(11) **EP 1 193 161 A1**
(43) Date of publication of application: **03.04.2002**
(21) Application number: 00956863.5
(22) Date of filing: 01.09.2000
(51) Int. Cl.: B62D 25/08

(54) **STRUCTURE OF INSTRUMENT PANEL SUPPORT MEMBER**

(30) Priority: 24.01.2000 JP 2000052497
(71) Applicant: Futaba Kogyo Co., Ltd., Hiroshima-shi, Hiroshima 732-0802 (JP)
(72) Inventor: TOKINAGA, Akinori, Hiroshima-shi, Hiroshima 732-0 802 (JP); OMO, Atsuhiko, Hiroshima-shi, Hiroshima 732-0802 (JP)
(74) Representative: Glawe, Delfs, Moll & Partner
(86) International application number: JP0005941
(87) International publication number: WO0154963

(57) **Abstract**

In an instrument panel supporting member structure in which steering brackets 3 that are positioned on the driver's seat side and that support the steering column, a bracket 2 that is connected to the dash panel, and a stay 5 that is positioned substantially on the central portion of the instrument panel supporting member structure and that is connected to the floor part, are disposed on a member main body 1 constituted by a pipe which is mounted on a vehicle, and both end parts of which are connected to the left and right front pillars of the vehicle, crush-molding is performed on both end portions of the pipe that constitutes the abovementioned member main body 1, so that joining parts that are joined to the front pillars are molded as integral parts of the member main body. As a result of joining parts consisting of the crush-molded parts 1a and 1b thus being integrally molded, the side brackets can be eliminated; furthermore, the steering supporting rigidity can be ensured.

## Description

### TECHNICAL FIELD

This invention relates to a structure of an instrument panel supporting member to which the instrument panel and steering column, etc., of an automobile are attached.

### BACKGROUND ART

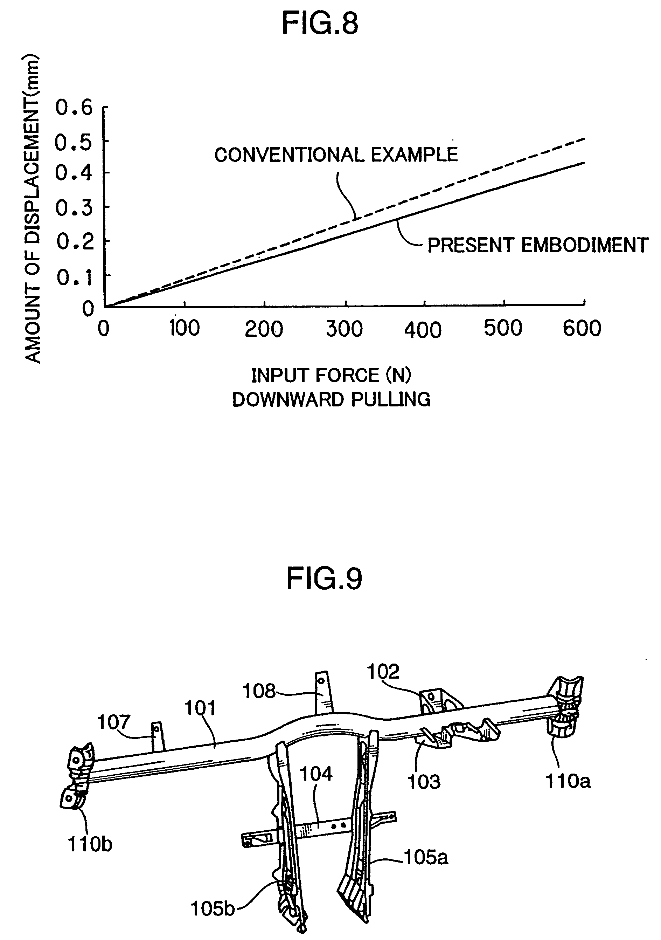

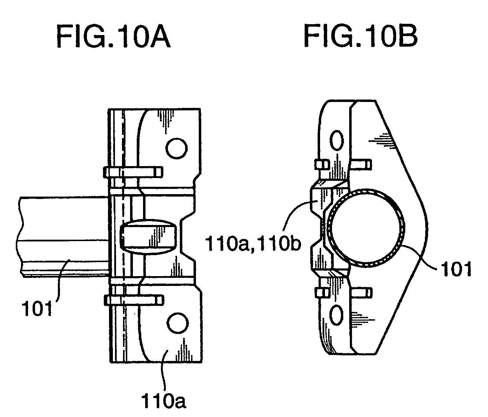

An instrument panel supporting member is laterally installed between the left and right front pillars on the back side of an instrument panel installed in a vehicle. A conventional instrument panel supporting member has a structure of the type shown in Japanese Unexamined Patent Publication No. H11-78983 and Figs. 9 and 10. Specifically, in the instrument panel supporting member shown in Figs. 9 and 10, side brackets 110a and 110b are fastened to both ends of a member main body 101 which consists of a pipe that constitutes a member with a closed cross section, and which extends in the direction of width of the vehicle, and these side brackets 110a and 110b are attached to front pillars (not shown in the figures) by bolt fastening, etc.

The upper end portions of a pair of stays 105a and 105b which are disposed at a specified interval are connected to substantially the central portion of the aforementioned member main body, and the lower portions of the stays 105a and 105b are connected to the floor part (not shown in the figures) of the aforementioned vehicle. The member main body 101 and the stays 105a and 10b are connected by welding, with consideration being given to the ease of installation on the vehicle. Furthermore, the pair of stays 105a and 105b are connected to each other at intermediate points by a connecting member 104 in order to provide reinforcement, i. e., in order to prevent twisting during the mounting of the stays on the vehicle, etc.

Furthermore, a steering bracket 103 which is positioned on the side of the driver's seat and which supports the steering column, a bracket 102 which is used for connection with the dash pane, and brackets 107 and 108 positioned in an appropriate number of other locations, are disposed on the abovementioned instrument panel supporting member.

In a conventional instrument panel supporting member structure of the abovementioned type, since the side brackets 110a and 110b are fastened by welding to both ends of the pipe that constitutes the member main body 101, the rigidity of the joint areas is insufficient; furthermore, the rigidity of the side brackets 110a and 110b as single parts also tends to be affected. As a result, it is difficult to obtain a sufficient supporting rigidity for the steering column and instrument panel.

Ordinarily, if the supporting rigidity of the instrument panel supporting member that supports the steering column is low, vibration of the steering column and the steering shaft supported by this steering column is generated as a result of resonance with the vibration of the vehicle during idling or high-speed operation of the vehicle, so that the vehicle operator may experience an unpleasant sensation.

Conventionally, furthermore, the connection pitch of the side brackets 110a and 110b with the left and right front pillars (not shown in the figures) has been increased in order to increase the rigidity against torsional movement about the axis of the pipe that constitutes the member main body 101. In other words, the supporting rigidity of the steering column increases with an increase in the connection pitch of both ends of the pipe and the front pillars. However, the size of the side brackets 110a and 110b must be increased in order to increase the connection pitch. Furthermore, stays 105a and 105b are installed in order to alleviate the aforementioned torsion, and a connecting member 104 is installed between these stays for purposes of reinforcement. As a result, the number of parts is unavoidably increased, so that the cost of manufacture is increased.

An object of the present invention is to solve the abovementioned problems, and to provide an instrument panel supporting member structure which prevents vibration of the steering column and steering shaft during idling and high-speed operation of the vehicle, and which makes it possible to reduce the cost of manufacture.

### DISCLOSURE OF THE INVENTION

In order to achieve the abovementioned object, the present invention is an instrument panel supporting member structure comprises: a main body constituted by a pipe which is arranged in a lateral direction and whose ends are connected to right and left front pillars; a steering bracket positioned on a driver's seat side for supporting a steering column; a bracket connected to a dash panel; and a stay positioned substantially on a central portion and connected to a floor part. The pipe constituting the main body is integrally formed with joining parts by crush-molding, the joining parts being joined to the front pillars.

In the present invention, since the connecting parts are formed as integral parts of the pipe that forms the main body as a result of crush-molding being performed on both ends of the pipe, the side brackets connected to the both ends of the main body in conventional supporting members become unnecessary. Accordingly, the number of parts required can be reduced and the rigidity of the connecting parts can be ensured.

### BRIEF DESCRIPTION OF THE DRAWINGS

Fig. 1 is a perspective view illustrating a structure of an instrument panel supporting member in accordance with an embodiment of the present invention;
Fig. 2 is a sectional view along the line A-A in Fig. 1, showing a state in which the steering column is attached;
Fig. 3 is a detailed perspective view of a portion of the instrument panel supporting member;
Fig. 4 is a sectional view of the stay;
Fig. 5 is a sectional view of the reinforcing member;
Fig. 6 is a graph showing the cross-sectional secondary moments and costs of various types of pipes current in use;
Fig. 7 is a graph showing the cross-sectional secondary moments and costs according to diameter for pipes currently in use, thickness being shown on the horizontal axis;
Fig. 8 is a graph showing comparison of the steering supporting rigidity of conventional example with that of the embodiment of the present invention;
Fig. 9 is a perspective view showing a conventional instrument panel supporting member structure;
Fig. 10 shows a front view (A) and a side view (B) of one of the side brackets connected to the instrument panel shown in Fig. 9, which is further connected to one of the front pillars of the vehicle.

### BEST MODE FOR CARRYING OUT THE INVENTION

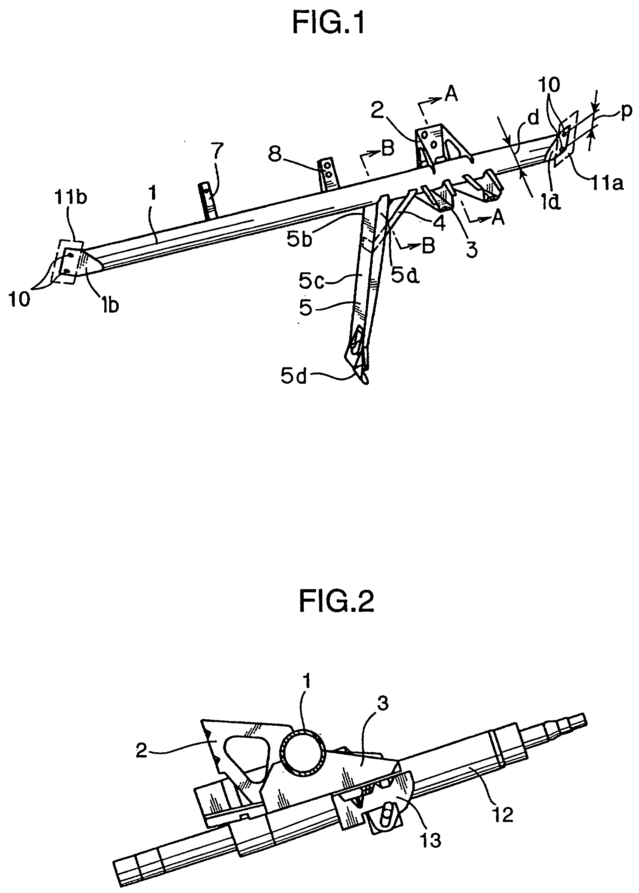

As is shown in Fig. 1, the instrument panel supporting member comprises a member main body 1 consisting of a pipe such as a steel pipe, etc., and brackets which are used to support the instrument panel and steering column, etc. (i. e., a bracket 2, steering brackets 3, a stay 5, a reinforcing member 4 and brackets 7 and 8). These brackets are formed by plastic working of an STKM material, sheet steel or an aluminum alloy expanded material, etc., and are fastened to the member main body 1 by welding, etc.

The cross-sectional rigidity of the pipe that constitutes the member main body 1 is set at a high value of approximately E · I = 2.0 ∼ 3.0 × 10⁸ (N · cm²), using the Young's modulus E and cross-sectional secondary moment I. Crush-molding is performed on both ends of this pipe, and the crush-molded parts 1a and 1b are used as connecting parts that are connected to the front pillars. In other words, the crush-molded parts 1a and 1b are connected to the front pillars on the back side of the instrument panel. Furthermore, {cross-sectional rigidity) E · I = (Young's modulus) E × (cross-sectional secondary moment) I.

Holes 10 are respectively formed in two locations at a pitch p of π ·d/2 (d is the external diameter of the pipe) in the surface of each of the aforementioned crush-molded parts 1a and 1b, and both end parts of the member main body 1 are fastened to the respective front pillars (not shown in the figures) by the tightening of bolts (not shown in the figures) which are passed through the abovementioned holes 10 to plate-form attachment parts 11a and 11b which are installed on the front pillars. Furthermore, instead of using such a bolt fastening, it would also be possible to fasten the abovementioned two locations to the attachment parts 11a and 11b by spot welding, etc.

As a result of the cross-sectional rigidity of the pipe that constitutes the member main body thus being increased, and the crush-molded parts 1a and 1b formed at both ends of the pipe thus being directly connected to the front pillars, the system is adjusted so that contribution of the member main body (pipe) 1 (among the respective constituent members) to the steering supporting rigidity is increased compared to that in a conventional example, while the contributions of the other constituent parts to the rigidity are appropriately reduced. Furthermore, depending on the layout of instruments disposed inside the instrument panel, roughly the central portion of the member main body 1 may be bent into a substantially trapezoidal shape similar to the shape of the pipe shown in Fig. 9, or partial crush-molding may be performed.

The approximate central portion of the instrument panel supporting member is supported by the floor part (not shown in the figures) of the vehicle via the stay 5. Furthermore, a bracket 2 which is used for connection with the dash panel and steering brackets 3 which are used to support the steering column are disposed in a position on the side of the driver's seat on the instrument panel supporting member. The concrete structures of the stay 5, bracket 2 and steering brackets 3 are as follows:

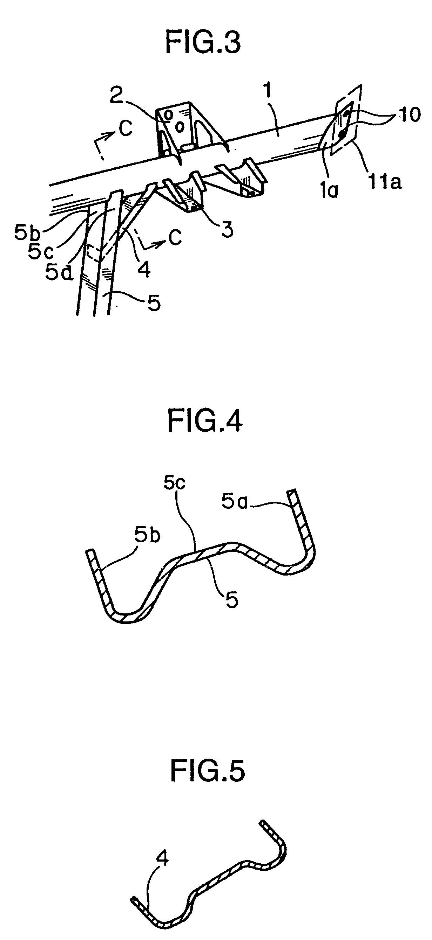

As is also shown in Figs. 3 and 4, the stay 5 is formed in a cross-sectional U shape consisting of a pair of flanges 5a and 5b in the front and rear, and a plate-form part 5c that connects these flanges 5a and 5b. Furthermore, this stay is disposed such that the side edge parts of the flanges 5a and 5b are oriented toward the steering brackets 3, and the stay is inclined with respect to the vertical direction so that the upper end of the stay is closer to the driver's seat than the lower end of the stay. Moreover, the areas of contact between the respective upper ends of the flanges 5a and 5b and plate-form part 5c and the member main body 1 are welded so that the upper end of the stay 5 is fastened to the member main body 1. Furthermore, the stay 5 is joined to the floor part (not shown in the figures) of the vehicle by a fastening part 5d which is disposed on the lower end portion of the stay 5. Moreover, a comparison of this structure with the conventional structure shown in Fig. 9 shows that the stay on the side of the front passenger seat in the conventional example (of the pair of stays installed in the example) is not installed in the present embodiment.

Furthermore, a reinforcing member 4 which acts as a beam is connected between a point in the vicinity of the upper end of the stay 5 and a point in the vicinity of one of the steering brackets 5 of the member main body 1. As is shown in Figs. 3 and 5, this reinforcing member 4 has a U-shaped or rectangular cross-sectional shape, and both ends of this reinforcing member are respectively welded to the member main body 1 and stay 5 at the points of contact.

The steering brackets 3 installed on the driver's seat side of the instrument panel supporting member are partially joined by welding to the member main body 1 at the points that contact the member main body 1, and are equipped with a plurality of nuts used for the attachment of the steering column. As is shown in Fig. 2, the steering brackets 3 and steering column 12 are connected by tightening brackets 13 (that are welded to the steering column 12) to the abovementioned nuts by means of bolts.

As is shown in Fig. 2, the bracket 2 is disposed above the steering brackets 3 and further toward the front of the vehicle in order to join this bracket 2 to the dash panel of the vehicle; furthermore, the bracket 2 is joined to the steering brackets 3 and the member main body 1 by welding at the points of contact. Taking the assembly characteristics of the vehicle into account, this bracket 2 and the dash panel are connected by bolts; specifically, bolts are passed through bolt through-holes formed in the bracket, and these bolts are tightened in the dash panel.

An embodiment of the present invention has been described above. The reason that the cross-sectional rigidity of the pipe constituting the member main body 1 is set in the range of E · I = 2.0 ∼ 3.0 × 10⁸ (N · cm²) in this embodiment is as follows: specifically, the steering supporting rigidity drops compared to that of a conventional example in cases where E · I < 2.0 × 10⁸ (N · cm²); on the other hand, although the steering supporting rigidity is improved in cases where E · I > 3.0 × 10⁸ (N · cm²), the mass of the parts and the cost of materials are increased, so that such a range is uneconomical. Within the abovementioned range, the best results were obtained when the cross-sectional rigidity of the pipe constituting the member main body 1 was set at approximately E · I = 2.3 × 10⁸ (N · cm²).

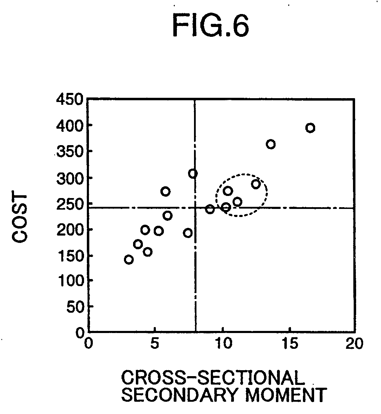

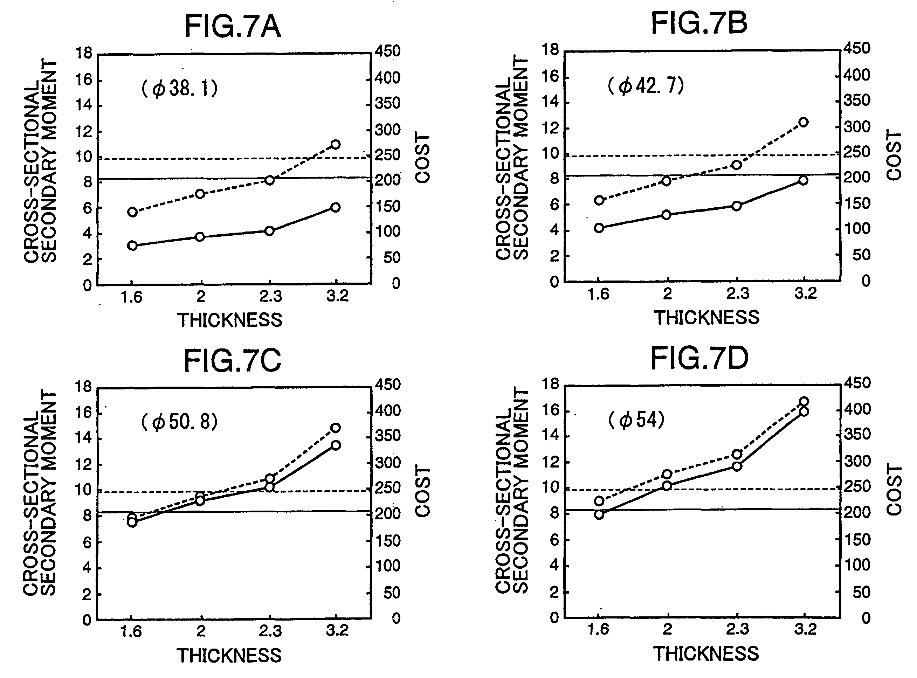

Data providing evidence that supports this point are shown in Fig. 6 and Figs. 7A through 7D. Fig. 6 shows in graph form the cross-sectional secondary moments and costs of various types of pipes currently in use. The ten-odd products indicated by circles in this graph have respectively different pipe diameters, thicknesses and costs. The pipe diameter values range from φ 38. 1 to 54 mm, and the thickness values range from 1.6 to 3.2 mm. The one-dot chain lines shown in this graph indicate the average cost of these products (approximately 244) and the average cross-sectional secondary moment of the products (approximately 8.13). In setting the rigidity of the pipe that constitutes the member main body 1, it may be the that a pipe whose cross-sectional secondary moment is greater than the average value, and whose cost is less than the average cost or near the average cost, achieves a balance between cost and rigidity.

Figs. 7A through 7D show the cross-sectional secondary moments and costs of currently used pipes according to diameter (for four different diameters, i. e., φ 38.1 mm, φ 42.7 mm, φ 50.8 mm and φ 54 mm), with thickness (four different thicknesses, i. e., 1.6 mm, 2.0 mm, 2.3 mm and 3.2 mm) shown on the horizontal axis. The data connected by a solid line in each figure are cross-sectional secondary moment values, and the data connected by a broken line are cost data. Furthermore, the average value of the aforementioned cross-sectional secondary moment and the average value of the cost are indicated by fine solid lines and fine broken lines.

Among these data, a pipe with a diameter of 54 mm and a thickness of 2.0 mm is most desirable, since this pipe has a cost that is near the average cost and a cross-sectional secondary moment that is sufficiently greater than the average value. Assuming that the Young's modulus in this case is E = 2.07 × 10⁷ (N/cm²), then the cross-sectional rigidity is approximately E · I = 2.3 × 10⁸ N · cm².

In the graph shown in Fig. 6, the area where the cross-sectional secondary moment is higher than the average value and the cost is in the vicinity of the average value is the area surrounded by a broken line. The cross-sectional secondary moment in this area ranges from approximately 2 × 10⁸ (N · cm²) to approximately 3 × 10⁸ (N · cm²) in terms of cross-sectional rigidity.

Furthermore, in this embodiment of the present invention, the side brackets are eliminated, and crush-molded parts 1a and 1b at both ends of the pipe constituting the member main body 1 are joined to the front pillars; as a result, the steering supporting rigidity is increased. Data indicating this are shown in Table 1.

The data shown in Table 1 are data that were obtained when a load of 100 kgf was applied to the steering column attachment position and the amount of displacement of the pipe at the steering column attachment position was measured for three examples, i. e., a conventional example in which respective side brackets 110a and 110b were attached to both ends of the pipe constituting the member main body, a comparative example in which a side bracket was attached only to the end portion of the abovementioned pipe on the side of the driver's seat, with a crush-molded part being formed on the end portion of the pipe located on the side of the front passenger seat, and the abovementioned embodiment of the present invention in which crush-molded parts were formed on both ends of the abovementioned pipe. Furthermore, the pipe had a diameter of 50.8 mm and a thickness of 1.6 mm, and the brackets were formed from steel plates with a thickness of 2.3 mm, and were bolted to the front pillars in two places at a pitch of 112 mmA. Furthermore, the crush-molded parts were bolted to the front pillars in two places at a pitch of 52 mm.

**Table 1**

| | Amount of Displacement (mm) |
|---|---|
| Conventional Example (Brackets on both ends) | 2.12 |
| Comparative Example (Bracket on driver's seat side only) | 2.22 |
| Embodiment of the Present Invention (Crush-molded parts on both ends) | 2.04 |

As is clear from this table, the steering supporting rigidity drops in the comparative example compared to the conventional example as a result of the concentration of stress on the bracket side. In the embodiment of the present invention, however, the stress is dispersed as a result of both ends of the pipe being crush-molded so that the brackets are eliminated; accordingly, the steering supporting rigidity is increased compared to the conventional example and comparative example.

Furthermore, if the stay 5 is disposed in an inclined state as described above in the embodiment of the present invention, this is advantageous for increasing the steering supporting rigidity. Data supporting this are shown in Table 2.

The data shown in Table 2 were obtained by comparing the steering supporting rigidity values obtained in a case where the stay 5 was installed in a vertical attitude (inclination 0°), a case where the stay 5 was installed at an inclination angle of 6° with the stay inclined so that the upper end was closer to the driver's seat than the lower end, and a case where the stay was similarly inclined at an inclination angle of 20°. The table shows the rate of variation in the rigidity value relative to the value obtained when the inclination was set at 0°.

**Table 2**

| | Rigidity Value (%) |
|---|---|
| Inclination 0° | 0 |
| Inclination 6° | 7.22 UP |
| Inclination 20° | 21.78 UP |

As is clear from this table, the steering supporting rigidity is increased by inclining the stay 5 so that the upper end of the stay is closer to the driver's seat than the lower end, and the steering supporting rigidity increases with an increase in the angle of inclination up to an inclination of at least about 20°. Accordingly, considering the shape of the instrument panel as well, it is desirable that the joining position of the upper end of the stay to the member main body be shifted approximately 60 mm toward the driver's seat from the attachment position of the lower end of the stay with respect to the floor part.

Furthermore, if a reinforcing member 4 is provided for the stay 5 as in the embodiment, the concentration of stress in the joint area between the upper end of the stay 5 and the member main body 1 can be avoided, i. e., the stress is dispersed in the reinforcing member 4. Accordingly, the steering supporting rigidity can be increased even further.

Furthermore, Fig. 8 is a graph which shows data obtained by measuring the amount of displacement at the positions of the steering brackets in a case where the load (input force) applied to the steering brackets was varied in order to compare steering supporting rigidity values. Here, the present embodiment is indicated by a solid line, and a conventional example is indicated by a broken line. Furthermore, in the conventional example that was used in this case, the diameter of the pipe constituting the member main body 101 was 50.8 mm, the thickness of the pipe was 2.3 mm on the side of the driver's seat and 1.6 mm on the side of the front passenger seat, the thickness of the steering brackets 103 was 3.2 mm, and the thickness of the bracket 102 was 2.3 mm. Moreover, in the embodiment of the present invention, the diameter of the pipe constituting the member main body 1 was 54 mm, the thickness of the pipe was 1.6 mm, the thickness of the steering brackets 3 was 3.2 mm, and the thickness of the bracket 2 was 2.3 mm.

As is clear from Fig. 8, the steering supporting rigidity is improved in the embodiment of the present invention compared to the conventional example. Considering the relationship between the resonance frequency and the supporting rigidity of the steering column, and the contribution of the instrument panel supporting member in the vibration propagation system consisting of the vehicle body, instrument panel supporting member and steering column in the vehicle, this indicates that the resonance point can be shifted to a higher frequency than the resonance point of the conventional example during idling and high-speed operation of the vehicle, so that there is less likelihood of resonance with the vibration of the vehicle, thus producing an effect that makes it possible to alleviate the unpleasant sensation experienced by the vehicle operator due to resonance of the steering column.

Furthermore, the present invention is not limited to the abovementioned embodiment; various modifications and alterations are possible within the technical scope of the present invention. Specifically, the abovementioned embodiment, a reinforcing member was installed between the pipe and the stay; however, it would also be possible to join the reinforcing member by plastic working of the abovementioned stay and reinforcing member as an integral unit.

Furthermore, in the abovementioned embodiment, crush-molding was performed on both ends of the pipe or on the end located closer to the driver's seat. However, it would also be possible to join the pipe to the front pillars by attaching brackets to the crush-molded surfaces. This can be performed without limiting the connection pitch to π × d/2 or less.

The principal special features of the instrument panel supporting member structure described above may be summarized as follows:

The present invention is characterized by the fact that in an instrument panel supporting member structure in which steering brackets that are positioned on the driver's seat side and that support the steering column, a bracket that is connected to the dash panel, and a stay that is positioned substantially on the central portion of the instrument panel supporting member structure and that is connected to the floor part, are disposed on a member main body consisting of a pipe which is mounted on a vehicle, and both end parts of which are connected to the left and right front pillars of the vehicle, crush-molding is performed on both end portions of the pipe that constitutes the abovementioned member main body, so that joining parts that are directly joined to the front pillars are molded as integral parts of the member main body.

As a result of this structure, the side brackets that are connected to both ends of the member main body in a conventional structure become unnecessary, so that the number of parts required can be reduced; furthermore, the rigidity of the joining parts can be guaranteed.

In the instrument panel supporting member structure of the present invention, it is desirable that the cross-sectional rigidity of the pipe that constitutes the aforementioned member main body be set in the range of E · I = 2.0 ∼ 3.0 × 10⁸ (N · cm²) using the Young's modulus E and cross-sectional secondary moment I. It is also desirable that the joining parts consisting of the crush-molded parts on both ends of the pipe be directly fastened to the front pillars by being bolted or spot-welded to the pillars, and that the connection pitch be set at π · d/2 or less where d is the diameter of the pipe,

The cross-sectional rigidity of the pipe that constitutes the member main body is set in the aforementioned range in order to avoid an unnecessary increase in the mass of the parts and the cost of the materials, while at the same time ensuring a sufficient steering supporting rigidity. Furthermore, as a result of the joining parts consisting of the crush-molded parts on both ends of the pipe being directly connected to the front pillars by being bolted or spot-welded to the front pillars, side brackets become unnecessary, and the rigidity of the joining parts at both ends of the pipe with respect to the front pillars can be increased. Furthermore, as a result of the connection pitch being set at π · d/2 or less where d is the diameter of the pipe, the pipe can be fastened by bolting or spot welding within the crush-molded surfaces.

Furthermore, in the instrument panel supporting member structure of the present invention, the steering supporting rigidity can be increased even further if the abovementioned stay is formed with a cross-sectional C shape, and the stay is installed at an inclination with respect to the vertical direction so that the upper end of the stay that is connected to the member main body is positioned closer to the driver's seat than the lower end of the stay that is connected to the floor part.

Moreover, if a reinforcing member is connected between a point in the vicinity of the upper end of the aforementioned stay and a point in the vicinity of one of the steering brackets on the member main body, the concentration of stress in the joint area between the stay and member can be avoided, which is even more advantageous for improving the steering supporting rigidity.

### INDUSTRIAL APPLICABILITY

Side brackets can be eliminated in the joining of both ends of the instrument panel supporting member to the front pillars, so that the cost of the member can be reduced by reducing the number of parts required, etc.; furthermore, the steering supporting rigidity can be increased.

## Claims

1. An instrument panel supporting member structure comprising:
a main body constituted by a pipe which is arranged in a lateral direction and whose ends are connected to right and left front pillars;
a steering bracket positioned on a driver's seat side for supporting a steering column;
a bracket connected to a dash panel; and
a stay positioned substantially on a central portion and connected to a floor part;
wherein the pipe constituting the main body is integrally formed with joining parts by crush-molding, the joining parts being joined to the front pillars.

2. The instrument panel supporting member structure according to claim 1, wherein the cross-sectional rigidity of the pipe constituting the main body is set in the range of E I = 2.0 ∼ 3.0 × 10⁸ (N · cm²) in which E denotes a Young's modulus and I denotes a cross-sectional secondary moment, and the joining parts formed by the crush-molding on the both ends of the pipe are respectively connected to the front pillars by bolts or welding, the connection pitch being set at π · d/2 or less in which d denotes a diameter of the pipe.

3. The instrument panel supporting member structure according to claim 1 or 2, wherein the stay is formed with a cross-sectional U shape, and the stay is installed at an inclination with respect to the vertical direction so that the upper end of the stay connected to the member main body is positioned closer to the driver's seat than the lower end of the stay connected to the floor part.

4. The instrument panel supporting member structure according to claim 3, wherein a reinforcing member is connected between a point in the vicinity of the upper end of the stay and a point in the vicinity of one of the steering brackets on the member main body.
